# EUROPEAN PATENT SPECIFICATION

(11) **EP 1 277 363 B1**
(45) Date of publication and mention of the grant of the patent: **07.04.2004**
(21) Application number: 01931737.9
(22) Date of filing: 26.04.2001
(51) Int. Cl.: H04Q 7/22

(54) **TIMING OF A SERVICE**
ZEITSTEUERUNG EINES DIENSTES
REGLAGE DE L'HEURE D'UN SERVICE

(30) Priority: 26.04.2000 FI 20000979
(43) Date of publication of application: 22.01.2003
(73) Proprietor: TeliaSonera Finland Oyj, 00510 Helsinki (FI)
(72) Inventor: KEISALA, Ilkka, FIN-01600 Vantaa (FI)
(74) Representative: Simmelvuo, Markku
(86) International application number: PCT/FI2001/000405
(87) International publication number: WO 2001/082638

(56) References cited:
- WO-A1-95/12933
- US-A- 5 878 351

## Description

### FIELD OF THE INVENTION

The present invention relates to telecommunication systems. In particular, the invention relates to a method and a system for the automatic timing of Push-type services based on the local time of the country of location of a mobile client visiting foreign countries.

### BACKGROUND OF THE INVENTION

A Push-type service means a service in which the service content is transmitted to the user e.g. immediately after the service content has been published, or periodically, in periods determined by the user. Push services may be used in different telecommunication networks, e.g. on the Internet and in mobile communication networks. Push service information implemented in a mobile communication network is transmitted to the mobile station of the client e.g. by means of a short message.

The use of push services in general requires that the client signs a service contract with an entity providing push services.

When push services are offered to mobile clients staying abroad (in different time zones), the timing of the services functions based on the time of home country determined in conjunction with the order. In other words, if the client who has ordered the push service is staying in another country, e.g. in the USA, then a message that was ordered in Finland at 12.00 a.m. is received in the USA already at 6.00 a.m., or even earlier.

In the GSM standards (GSM, Global System for Mobile communications) there is determined the format and the use of the time difference (Network time zone). This has been presented e.g. in the standard GSM 04.08 Version 5.3.0 July 1996 of ETSI (ETSI, European Telecommunication Standardization Institute. The piece of information presented in the standard is, however, sent only to the mobile station. Further, for CAMEL services (CAMEL, Customized Applications for Mobile network Enhanced Logic), a corresponding piece of time difference information has been determined, e.g. in the standard GSM 03.78 Version 6.2.0 Release 1997 of ETSI. This piece of time difference information is, however, not sent in conjunction with the location updating of the mobile station, i.e. the protocol does not support its transmitting to the home location register at all.

The problem is that the automatic services offered to clients visiting foreign countries are timed according to the clock of the service provider and not to the clock of the country of residence of the client. It is possible for a mobile client to take into account the time difference when ordering, and based on this determine the transmission time. This kind of solution is, however, cumbersome and impractical. When the mobile client again changes the time zone, then the transmission time of a message in accordance with the push service should be again changed manually.

### OBJECTIVE OF THE INVENTION

The objective of the invention is to eliminate the drawbacks referred to above or at least significantly to alleviate them. One specific objective of the present invention is to disclose a new type of method and system that enable one to adjust the transmission time automatically so that it depends on the actual location of the client.

### BRIEF DESCRIPTION OF THE INVENTION

The invention relates to a more precise timing and delivering of the push services at the disposal of mobile stations. The invention enables one to time the messages received by a mobile subscriber visiting foreign countries that relate to the push services ordered based on the actual location of the mobile subscriber.

The invention relates to a method for the re-timing of the push services connected with mobile stations based on the location of the mobile subscriber. In the method, a push service is activated for the mobile subscriber, and the transmission moment of the message connected with the service is determined. This is used to mean that the mobile subscriber separately orders the push services selected by him or her from the operator. In conjunction with the ordering of the services, a point of time is determined at which the mobile subscriber wishes to receive the messages connected with the push services ordered by him or her.

According to the invention, information relating to the mobile subscriber is transmitted to the provider of the push service based on the location update information of the mobile station. The information to be transmitted includes e.g. the subscriber identifier of the mobile subscriber and the location information of the subscriber, which consists of the country and operator code. At the information transmitted, it is possible to determine the time difference between the location of that moment of the mobile station and the location of the home operator of the mobile subscriber. The push service that was set is re-timed based on the aforementioned time difference, e.g. in such a way that the aforementioned time difference is subtracted from the transmission moment of the message originally determined for the service, or the aforementioned time difference is added to the transmission moment of the message originally determined for the service, depending on the location of the mobile station. The message connected with the push service is sent to the mobile subscriber in accordance with the new timing.

In an embodiment, when the location of the mobile station changes, a location update message is sent thereof to a mobile switching center/visitor location register. The location update message is preferably used to mean a location update message of the GSM system. The location update message is transmitted from the mobile switching center/visitor location register of the network to be visited further to a home location register.

In an embodiment, the information relating to the mobile subscriber comprises information relating to the identification and location of the mobile subscriber. The information is sent from the home location register to the push server or some other network component. This kind of information is e.g. the subscriber identifier of the mobile subscriber or location information of the subscriber. The location information of the subscriber is used to mean e.g. the country code of the visitor location register and/or the operator code. The operator code refers to a foreign operator whose area the mobile subscriber visits. Based on the aforementioned information relating to the location, the piece of time difference information is determined. The piece of time difference information is used to mean the time difference determined based on the geographical position of the home country of the mobile subscriber and of the foreign operator or its mobile switching center.

The location update message created by the mobile station triggers in the home location register a trigger, in the consequence of which information relating to the identification and location of the mobile subscriber is sent from the home location register to the push server or some other network component. The trigger facility is used to mean an event in which some predetermined event or message triggers the performing of some other predetermined event or function. In one embodiment, the push server sends the inquiry message connected with the mobile subscriber to the home location register.

In an embodiment, in the mobile switching center/visitor location register or some other network component, a piece of time difference information is added to the information to be transmitted to the home location register. This is preferably used to mean that the piece of time difference information that follows the geographical time zone division is added in the mobile switching center/visitor location register to the MAP protocol message (MAP, Mobile Application Part). The piece of time difference information is advantageously used to mean the piece of time zone information. From the home location register, information relating to the identification and location of the mobile subscriber, as well as the piece of time difference information, is sent to the push server. The information relating to the identification and location is e.g. the subscriber identifier of the mobile subscriber or location information of the subscriber. The piece of location information of the subscriber is used to mean e.g. the country code of the visitor location register and/or the operator code. The operator code refers to a foreign operator whose area the mobile subscriber visits.

The push service set is re-timed based on the piece of time difference information, e.g. so that the aforementioned piece of time difference information is added to or subtracted from the time of order set beforehand, depending on whether the mobile subscriber is located east or west of his/her home country. The message connected with the push service is sent to the mobile subscriber based on the new timing. In one advantageous embodiment, the piece of time difference information received from the location update message is saved to the home location register.

In one advantageous embodiment, the location update message sent by the mobile station, or parts of it, is sent to the push server or some other corresponding system based on the location update message, including a subscriber identifier, a piece of location information of the subscriber, and a piece of time difference information.

The invention relates to a system for re-timing the push services connected with a mobile station based on the location of the mobile subscriber in a telecommunication system which comprises a mobile switching center/visitor location register, a mobile station, from which there is a connection arranged to the mobile switching center, a home location register, from which there is a connection arranged to the mobile switching center/visitor location register, a push server, from which there is a connection arranged to the home location register, and a database from which there is a connection arranged to the push server. According to the invention, the system comprises a message generator for sending the information relating to the identification and location of the mobile subscriber to the push server, a first data record, which comprises pairs of country code-operator code-time difference, and an application which receives the identification and location information relating to the mobile subscriber from the home location register and which retrieves the country code from the first data record saved to the database and by means of the operator code the time difference attached to it. In addition, the system comprises updating facilities for counting a new transmission time and for timing the point of time of transmission based on the aforementioned piece of time difference information, a second data record for saving the new point of time of transmission and the piece of time difference information, and a transmitter for sending the message connected with the push service to the mobile subscriber based on the re-timed transmission time.

In one embodiment of the invention, the system comprises changing facilities for changing the message between the mobile switching center/visitor location register and the home location register so that a piece of time difference information is added to the message.

In one embodiment of the invention, the changing facilities are further arranged to change the MAP protocol so that the MAP protocol message to be sent to the home location register contains the piece of time difference information connected with the network element.

In one embodiment of the invention, the home location register comprises connection facilities for connecting the piece of time difference information received from the location update message as a part of some trigger of the home location register.

In one embodiment of the invention, the home location register comprises saving facilities for saving the piece of time difference information received from the location update message.

The present invention enables one to automatically implement the timing of push services for clients visiting foreign countries. The time difference to be used in the transmission is determined based on the country of location of the mobile subscriber.

### BRIEF DESCRIPTION OF THE DRAWINGS

In the following section, the invention will be described in detail by the aid of a few examples of its embodiments, in which
Fig. 1a represents one advantageous embodiment of the invention,
Fig. 1b represents one advantageous embodiment of the invention, and
Fig. 2 represents another advantageous embodiment of the invention.

### DETAILED DESCRIPTION OF THE INVENTION

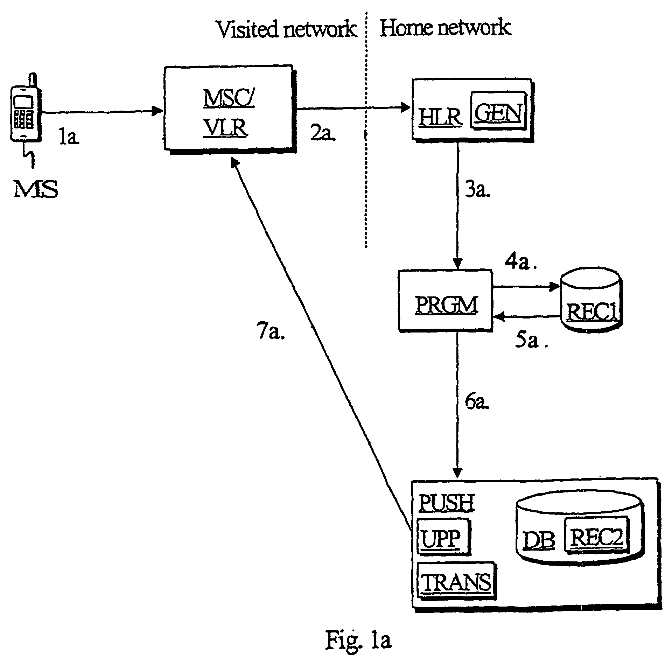

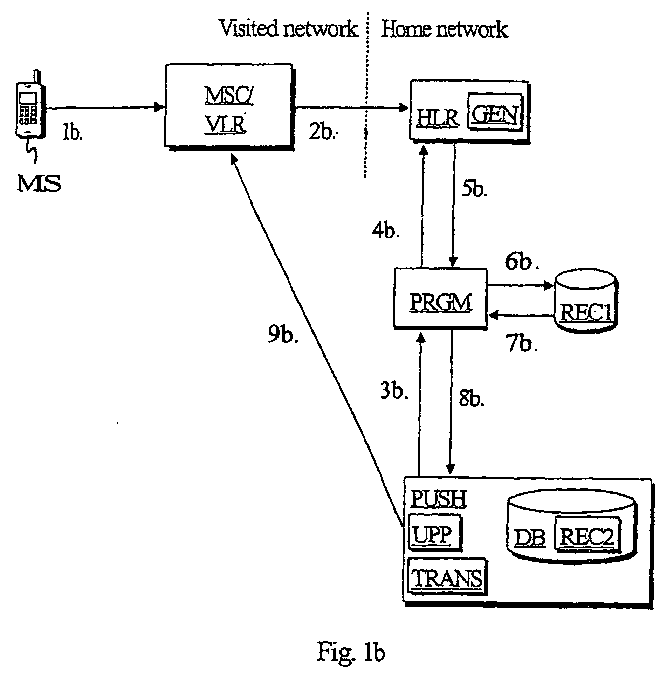

The system as shown in Fig. 1 comprises a mobile station MS (MS, Mobile Station), from which there is a connection arranged to the mobile switching center/visitor location register MSC/VLR (MSC, Mobile Switching Center; VLR, Visitor Location Register). The mobile switching center/visitor location register MSC/VLR is communicating with the home location register HLR (HLR, Home Location Register), to which information relating to the mobile subscriber has been saved, e.g. location information and information relating to the identification of the mobile subscriber. In addition, the system as shown in Fig. 1 comprises an application PRGM, whose task is to receive the message relating to the mobile subscriber coming from the home location register HLR. The application PRGM may be located in the push server PUSH or it may be a separate component of the system. From the application PRGM there is a connection arranged to the push server PUSH. Attached to the push server PUSH is a database DB, to which information needed in the implementation of the push service has been saved, such as the identification information of the clients connected with the push service and the transmission moments of the messages connected with the service.

The broken line between the mobile switching center/visitor location register MSC/VLR and the home location register HLR is used to describe the fact that the components on the left side of the line belong to the sphere of the mobile communication network to be visited. The components on the right side are under the control of the home operator of the mobile subscriber.

The example as shown in Fig. 1a assumes that a push service has been activated for the mobile subscriber. This is used to mean that the mobile subscriber separately orders the push services selected by him or her from the operator. In conjunction with the ordering of the services, the point of time is determined at which the mobile subscriber wishes to receive the messages connected with the push services ordered by him or her.

When the mobile stations moves in the area of the mobile communication network, update information thereof is sent to the mobile communication network. One such piece of update information is the location update message, arrow 1a. The message is sent to the mobile switching center/visitor location register MSC/VLR, when one notices that the mobile station MS has changed the location area. The mobile switching center/visitor location register MSC/VLR transmits the location update message further to the home location register HLR, to which the former piece of location information of the mobile station has been saved, arrow 2a. The location update message updates the former piece of location information in the home location register HLR with a new piece of information. The location update message contains information e.g. on what country the mobile station is located in, in the area of which mobile switching center/visitor location register MSC/VLR the mobile station is located, etc. The location update message is a message consistent with the mobile station standard.

When the location of the subscriber MS changes, the home location register sends information to the application PRGM. The message generator GEN means the very method mentioned above that is used to send the information to the application PRGM. The home location register HLR sends to the application PRGM the subscriber identifier of the mobile subscriber and information relating to the location, arrow 3a. The piece of location information refers e.g. to the country code of the visitor location register of the mobile communication network to be visited and to the code of the operator controlling the mobile communication network.

When the application PRGM receives the information sent by the home location register HLR, it retrieves the country code from the first data record REC1 and by means of the operator code the piece of time difference information attached to them, arrows 4a and 5a. Thus, there are pairs of country code-operator code-time difference saved to the first data record REC1. The application PRGM sends the piece of time difference information and the subscriber identifier further to the push server PUSH, arrow 6a. The push server PUSH comprises a function which adds to/subtracts the received time difference from the predetermined time of order of the push service and re-times the transmission of the message in accordance with the push service based on this. The updating facilities UPP are disposed in the push server PUSH to accomplish this functionality. The piece of time difference information and the new transmission time are saved to a second data record REC2 included in the database DB. The data records REC1 and REC2 may be located in the same database DB. The above-mentioned functionality may also be located in another component than the push server PUSH.

In the push server PUSH there is arranged a transmitter TRANS for sending the message connected with the push service to the mobile subscriber based on the re-timed transmission time. As shown by arrow 7a, the re-timed message connected with the push service is transmitted to the mobile switching center/visitor location register MSC/VLR and from it further to the mobile station MS.

The message generator GEN, application PRGM, updating facilities UPP and the transmitter TRANS have been implemented by a way known in itself, e.g. by a computer or computer software, and are therefore not described in more detail in this connection.

The system as shown in Fig. 1b comprises a mobile station MS, from which there is a connection arranged to the mobile switching center/visitor location register MSC/VLR. The mobile switching center/visitor location register MSC/VLR is communicating with the home location register HLR, to which information relating to the mobile subscriber has been saved, e.g. location information and information relating to the identification of the mobile subscriber. In addition, the system as shown in Fig. 1b comprises an application PRGM. The application PRGM may be located in the push server PUSH or it may be a separate component of the system. From the application PRGM there is a connection arranged to the push server PUSH. Attached to the push server PUSH is a database DB, to which information needed in the implementation of the push service has been saved, such as the identification information of the clients connected with the push service and the transmission moments of the messages connected with the service.

The broken line between the mobile switching center/visitor location register MSC/VLR and the home location register HLR is used to describe the fact that the components on the left side of the line belong to the sphere of the mobile communication network to be visited. The components on the right side are under the control of the home operator of the mobile subscriber.

The example as shown in Fig. 1b assumes that a push service has been activated for the mobile subscriber. This is used to mean that the mobile subscriber separately orders the push services selected by him or her from the operator. In conjunction with the ordering of the services, the point of time is determined at which the mobile subscriber wishes to receive the messages connected with the push services ordered by him or her.

When the mobile stations moves in the area of the mobile communication network, update information thereof is sent to the mobile communication network. One such piece of update information is the location update message, arrow 1b. The message is sent to the mobile switching center/visitor location register MSC/VLR, when one notices that the mobile station MS has changed the location area. The mobile switching center/visitor location register MSC/VLR transmits the location update message further to the home location register HLR, to which the former piece of location information of the mobile station has been saved, arrow 2b. The location update message updates the former piece of location information in the home location register HLR with a new piece of information. The location update message contains information e.g. on what country the mobile station is located in, in the area of which mobile switching center/visitor location register MSC/VLR the mobile station is located, etc. The location update message is a message consistent with the mobile station standard.

When the push service wishes to make sure of the location of the mobile subscriber connected with the push service, it sends a location inquiry to the application PRGM, arrow 3b. The application PRGM directs the inquiry further to the home location register HLR, arrow 4b. As shown by arrow 5b, the home location register HLR sends information relating to the subscriber to the application PRGM. The message generator GEN means the very method mentioned above that is used to send the information to the application PRGM. The home location register HLR sends to the application PRGM the subscriber identifier of the mobile subscriber and information relating to the location. The piece of location information refers e.g. to the country code of the visitor location register of the mobile communication network to be visited and to the code of the operator controlling the mobile communication network.

When the application PRGM receives the information sent by the home location register HLR, it retrieves the country code from the first data record REC1 and by means of the operator code the piece of time difference information attached to them, arrows 6b and 7b. Thus, there are pairs of country code-operator code-time difference saved to the first data record REC1. The application PRGM sends the piece of time difference information and the subscriber identifier further to the push server PUSH, arrow 8b. The push server PUSH comprises a function which adds to/subtracts the received time difference from the predetermined time of order of the push service and re-times the transmission of the message in accordance with the push service based on this. The updating facilities UPP are disposed in the push server PUSH to accomplish this functionality. The piece of time difference information and the new transmission time are saved to the second data record REC2 included in the database DB. The data records REC1 and REC2 may be located in the same database DB. The above-mentioned functionality may also be located in another component than the push server PUSH.

In the push server PUSH there is arranged a transmitter TRANS for sending the message connected with the push service to the mobile subscriber based on the re-timed transmission time. As shown by arrow 9b, the re-timed message connected with the push service is transmitted to the mobile switching center/visitor location register MSC/VLR and from it further to the mobile station MS.

The message generator GEN, application PRGM, updating facilities UPP and the transmitter TRANS have been implemented by a way known in itself, e.g. by a computer or computer software, and are therefore not described in more detail in this connection.

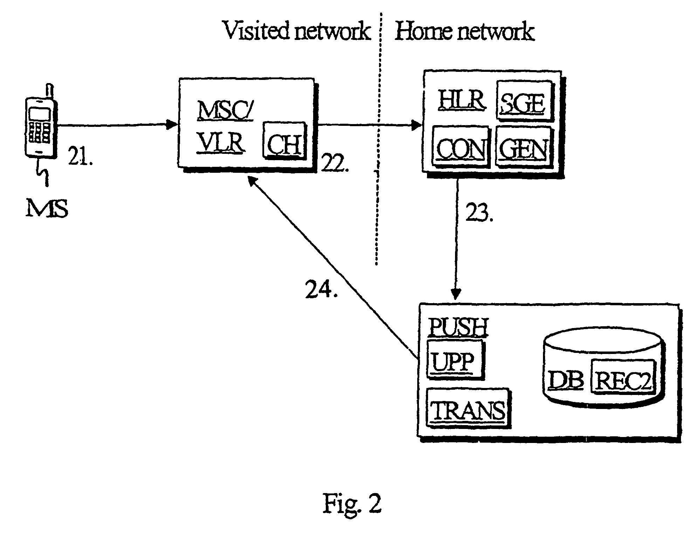

The system as shown in Fig. 2 comprises a mobile station MS, from which there is a connection arranged to the mobile switching center/visitor location register MSC/VLR. The mobile switching center/visitor location register MSC/VLR is communicating with the home location register HLR, to which information relating to the mobile subscriber has been saved, e.g. location information and information relating to the identification of the mobile subscriber. In addition, the system as shown in Fig. 2 comprises a push server PUSH. Attached to the push server PUSH is a database DB, to which information needed in the implementation of the push service has been saved, such as the identification information of the clients connected with the push service and the transmission moments of the messages connected with the service.

The broken line between the mobile switching center/visitor location register MSC/VLR and the home location register HLR is used to describe the fact that the components on the left side of the line belong to the sphere of the mobile communication network to be visited. The components on the right side are under the control of the home operator of the mobile subscriber.

The example as shown in Fig. 2 assumes that a push service has been activated for the mobile subscriber. This is used to mean that the mobile subscriber separately orders the push services selected by him or her from the operator. In conjunction with the ordering of the services, the point of time is determined at which the mobile subscriber wishes to receive the messages connected with the push services ordered by him or her.

When the mobile stations moves in the area of the mobile communication network, update information thereof is sent to the mobile communication network. One such piece of update information is the location update message, arrow 21. The message is sent to the mobile switching center/visitor location register MSC/VLR, when one notices that the location area of the mobile station MS has changed. The mobile switching center/visitor location MSC/VLR adds the piece of time difference information to the message to be sent to the home location register HLR. Beginning with the versions 6.1.0 of MAP 09.02, the time zone field is configurable and can be sent for CAMEL services. In that case, the necessary amendment is made in the MAP protocol and the time zone field is transmitted to the home location register HLR in a location update message, arrow 22. In the mobile switching center/visitor location register MSC/VLR there are arranged changing facilities CH, by which the protocol message between the mobile switching center/visitor location register MSC/VLR and the home location register HLR is changed.

The mobile switching center/visitor location register MSC/VLR transmits the specified location update message to the home location register HLR, the aforementioned message containing a piece of time zone information. The location update message updates the former piece of location information in the home location register HLR with a new piece of information. The location update message contains information e.g. on what country the mobile station is located in, in the area of which mobile switching center/visitor location register the mobile station is located, etc.

When the location of the mobile station MS changes and the mobile switching center/visitor location register MSC/VLR sends a location update message thereof, the home location register HLR sends a message thereof to the push server. The message generator GEN is used to mean a method by which the message is created and sent to the push service PUSH. The piece of time zone information may be included in the message created by the home location register HLR and/or it may be saved to the home location register HLR. The saving facilities SGE are disposed in the home location register HLR for saving the piece of time zone information. The connection facilities CON are used to connect the piece of time zone information received from the location update message as a part of the message to be transmitted to the push server PUSH.

The home location register HLR sends to the push server PUSH the subscriber identifier of the mobile subscriber, information relating to the location, as well as the piece of time zone information, arrow 23. The subscriber identifier is used to mean e.g. the MSISDN number or some other subscriber identifier. The piece of location information refers e.g. to the country code of the mobile communication network to be visited and to the code of the operator controlling the mobile communication network. The piece of time zone information refers to the piece of time difference information which is derived by comparing the local time with the international mean time.

The push server PUSH comprises a function which adds to/subtracts the received time difference from the predetermined time of order of the push service and re-times the transmission of the message in accordance with the push service based on this. The updating facilities UPP are disposed in the push server PUSH to accomplish this functionality. The piece of time difference and the new transmission time are saved to the second data record REC2 included in the database DB.

In the push server PUSH there is arranged a transmitter TRANS for sending the message connected with the push service to the mobile subscriber based on the re-timed transmission time. As shown by arrow 24, the re-timed message connected with the push service is transmitted to the mobile switching center/visitor location register MSC/VLR and from it further to the mobile station MS.

The changing facilities CH, message generator GEN, saving facilities SGE, connection facilities CON, updating facilities UPP and the transmitter TRANS have been implemented by a way known in itself, e.g. by a computer or computer software, and are therefore not described in more detail in this connection.

The invention is not restricted merely to examples of its embodiments referred to above, instead many variations are possible within the scope of the inventive idea defined by the claims.

## Claims

1. A method for re-timing the push services connected with a mobile subscriber based on the location of the mobile subscriber, which method comprises the steps of:
activating the push service for the mobile subscriber;
determining the transmission moment of a message connected with the service;
**characterized in that** the method further comprises the steps of:
transmitting information relating to the mobile subscriber to the provider of the push service based on the location update information of the mobile station, at which information it is possible to determine the time difference between the location of that moment of the mobile station and the location of the home operator of the mobile subscriber;
re-timing the push service set based on the piece of time difference information.
sending the message connected with the push service to the mobile subscriber based on the new timing.

2. The method according to claim 1, **characterized in that** the subscriber identifier of the mobile subscriber, the piece of location information of the subscriber and the country and operator code connected with the location are transmitted to the provider of the push service.

3. The method according to claim 1 or 2, **characterized in that** the push service set is re-timed so that the aforementioned piece of time difference information is subtracted from the point of time of transmission originally determined for the service, or the aforementioned piece of time difference information is added to the point of time of transmission originally determined for the service, depending on the location of the mobile station.

4. The method according to any one of the preceding claims 1 - 3, **characterized in that** the information relating to the mobile subscriber comprises information relating to the identification and location of said mobile subscriber.

5. The method according to any one of the preceding claims 1 - 4, **characterized in that** the location update information of the mobile station comprises a location update message transmitted from a mobile switching center/visitor location register to a home location register after the location of said mobile station has changed.

6. The method according to any one of the preceding claims 1 - 5, **characterized in that** a piece of time difference information is attached to the location update information to be transmitted from a mobile switching center/visitor location register to a home location register and from the home location register to the push server based on which piece of time difference information the set push service is re-timed instead of the determined time difference.

7. The method according to claim 6, **characterized in that** the piece of time difference information is attached to the MAP protocol message to be transmitted from the mobile switching center/visitor location register to the home location register.

8. The method according to claim 6 or 7, **characterized in that** the piece of time difference information is used to mean a piece of time zone information.

9. The method according to any one of the preceding claims 6 - 8, **characterized in that** the piece of information relating to the location of the mobile subscriber is used to mean the country code of the mobile switching center/visitor location register and/or the operator code.

10. The method according to any one of preceding claims 6 - 9, **characterized in that** the piece of time difference information received from the location update message is attached as a part of some trigger of the home location register.

11. The method according to any one of the preceding claims 6 - 10, **characterized in that** the piece of time difference information received from the location update message is saved to the home location register.

12. The method according to any one of the preceding claims 6 - 11, **characterized in that** from the home location register, the subscriber identifier, the piece of location information of the subscriber and the piece of time difference information are sent to the push-server or some other network component based on the location update message, when the location update message created due to the change of location of the mobile station triggers the retransmission of the information in the home location register.

13. The method according to any one of the preceding claims 6 - 12, **characterized in that** the push service is re-timed by adding to or subtracting the aforementioned piece of time difference information from a time of order set beforehand.

14. A system for the re-timing of push services connected with a mobile station based on the location of the mobile subscriber in a telecommunication system comprising:
a mobile switching center (MSC/VLR);
a mobile station (MS), from which there is a connection arranged to the mobile switching center/visitor location register (MSC/VLR);
a home location register (HLR), from which there is a connection arranged to the mobile switching center/visitor location register (MSC/VLR);
a push server (PUSH), from which there is a connection arranged to the home location register (HLR);
a database (DB), from which there is a connection arranged to the push server (PUSH);
**characterized in that** the system comprises:
a message generator (GEN) for sending a piece of information relating to the identification and location of the mobile subscriber to the push server (PUSH);
a first data record (REC1) which comprises pairs of country code-operator code- piece of time difference;
an application (PRGM) which receives the piece of identification and location information relating to the mobile subscriber from the home location register (HLR) and which retrieves the country code from the first data record (REC1) and by means of the operator code the time difference attached to it;
updating facilities (UPP) for counting a new transmission time and for re-timing the point of time of transmission based on the aforementioned piece of time difference information;
a second data record (REC2) for saving the new point of time of transmission and the piece of time difference information; and
a transmitter (TRANS) for sending the message connected with the push service to the mobile subscriber based on the re-timed transmission time.

15. The system according to claim 14, **characterized in that** the system further comprises:
changing facilities (CH) for changing the protocol message between the mobile switching center/visitor location register (MSC/VLR) and the home location register (HLR) so that a piece of time difference information is added to the protocol message.

16. The system according to claim 15, **characterized in that** the changing facilities (CH) are further arranged to change the MAP protocol so that the MAP protocol message to be sent to the home location register (HLR) contains the piece of time zone information.

17. The system according to claim 15 or 16, **characterized in that** the home location register (HLR) comprises connection facilities (CON) for connecting the piece of time difference information received from the location update message as a part of some trigger of the home location register.

18. The system according to any one of the preceding claims 15 - 17, **characterized in that** the home location register (HLR) comprises saving facilities (SGE) for saving the piece of time difference information received from the location update message.

## Patentansprüche

1. Verfahren zur Neu-Zeitsteuerung der mit einem Mobilteilnehmer verbundenen Push-Services basierend auf dem Standort des Mobilteilnehmers, umfassend folgende Schritte:
Aktivieren des Push-Service für den Mobilteilnehmer;
Feststellen des Sendezeitpunkts einer mit dem Service verbundenen Nachricht;
**dadurch gekennzeichnet, daß** daß Verfahren weiterhin folgende Schritte beinhaltet:
Senden von Information bezüglich des Mobilteilnehmers zu dem Provider des Push-Service basierend auf Standort-Aktualisierungsinformation der Mobilstation, anhand welcher Information es möglich ist, die Zeitdifferenz zwischen dem Ort der Mobilstation zu jenem Zeitpunkt und dem Ort des Home-Operators des Mobilteilnehmers zu ermitteln;
Umstellen der eingestellten Zeitsteuerung des Push-Service basierend auf der Zeitdifferenz-Information;
Senden der mit dem Push-Service verbundenen Nachricht zu dem Mobilteilnehmer basierend auf der neuen Zeitsteuerung.

2. Verfahren nach Anspruch 1, **dadurch gekennzeichnet, daß** die Teilnehmer-Kennung des Mobilteilnehmers, die Standort-Information des Teilnehmers und das Land sowie der Operator-Code, der zu dem Standort gehört, an den Provider des Push-Service gesendet werden.

3. Verfahren nach Anspruch 1 oder 2, **dadurch gekennzeichnet, daß** der eingestellte Push-Service derart in seiner Zeitsteuerung umgestellt wird, daß die genannte Zeitdifferenz-Information subtrahiert wird von dem Sende-Zeitpunkt, der ursprünglich für den Service festgelegt wurde, oder die Zeitdifferenz-Information auf den Sende-Zeitpunkt addiert wird, der ursprünglich für den Service festgelegt wurde, abhängig von dem Ort der Mobilstation.

4. Verfahren nach einem der Ansprüche 1 bis 3, **dadurch gekennzeichnet, daß** die Information bezüglich des Mobilteilnehmers Information über die Kennung und den Standort des Mobilteilnehmers umfaßt.

5. Verfahren nach einem der Ansprüche 1 bis 4, **dadurch gekennzeichnet, daß** die Aufenthaltsort-Aktualisierungsinformation der Mobilstation eine Standort-Aktualisierungsnachricht aufweist, die von einer Mobilvermittlungsstelle/Besucherdatei zu einer Heimatdatei gesendet wird, nachdem sich der Standort der Mobilstation geändert hat.

6. Verfahren nach einem der Ansprüche 1 bis 5, **dadurch gekennzeichnet, daß** die Zeitdifferenz-Information an die von einer Mobilvermittlungsstelle/Besucherdatei an eine Heimatdatei und von der Heimatdatei an den Push-Server zu sendende Standort-Aktualisierungsinformation angehängt wird, basierend darauf, auf welche Zeitdifferenz-Information der eingestellte Push-Service in seiner Zeitsteuerung umgestellt wird, anstatt der vorbestimmten Zeitdifferenz.

7. Verfahren nach Anspruch 6, **dadurch gekennzeichnet, daß** die Zeitdifferenz-Information an die MAP-Protokollnachricht angehängt wird, die von der Mobilvermittlungsstelle/Besucherdatei an die Heimatdatei zu senden ist.

8. Verfahren nach Anspruch 6 oder 7, **dadurch gekennzeichnet, daß** die Zeitdifferenz-Information die Bedeutung einer Zeitzoneninformation hat.

9. Verfahren nach einem der Ansprüche 6 bis 8, **dadurch gekennzeichnet, daß** die sich auf den Standort des Mobilteilnehmers beziehende Information die Bedeutung eines Länder-Codes der Mobilvermittlungsstelle/Besucherdatei und/oder des Operator-Codes hat.

10. Verfahren nach einem der Ansprüche 6 bis 9, **dadurch gekennzeichnet, daß** die Zeitdifferenz-Information, die von der Standort-Aktualisierungsnachricht empfangen wird, als ein Teil eines Auslösers der Heimatdatei angehängt ist.

11. Verfahren nach einem der vorhergehenden Ansprüche 6 bis 10, **dadurch gekennzeichnet, daß** die Zeitdifferenz-Information, die von der Standort-Aktualisierungsnachricht empfangen wird, in der Heimatdatei gesichert wird.

12. Verfahren nach einem der Ansprüche 6 bis 11, **dadurch gekennzeichnet, daß** aus der Heimatdatei die Teilnehmerkennung, die Standortinformation des Teilnehmers und die Zeitdifferenz-Information an den Push-Server oder eine andere Netzwerkkomponente gesendet werden, basierend auf der Standort-Aktualisierungsnachricht, wenn die Standort-Aktualisierungsnachricht, welche aufgrund der Standortänderung der Mobilstation erzeugt wurde, die Rücksendung der Information in das Heimatregister veranlaßt.

13. Verfahren nach einem der Ansprüche 6 bis 12, **dadurch gekennzeichnet, daß** der Push-Service dadurch in seiner Zeitsteuerung umgestellt wird, daß die erwähnte Zeitdifferenz-Information auf eine vorab eingestellte Auftragszeit addiert oder von dieser subtrahiert wird.

14. System zur Umstellung der Zeitsteuerung von Push-Services, die mit einer Mobilstation verbunden sind, basierend auf dem Standort des Mobilteilnehmers in einem Telekommunikationssytem umfassend:
eine Mobilvermittlungsstelle (MSC/VLR);
eine Mobilstation (MS), von der aus eine Verbindung zu der Mobilvermittlungsstelle/Besucherdatei (MSC/VLR) eingerichtet wird;
eine Heimatdatei (HLR), von der eine Verbindung zu der Mobilvermittlungsstelle/Besucherdatei (MSC/VLR) eingerichtet wird;
einen Push-Server (PUSH), von dem eine Verbindung zu der Heimatdatei (HLR) eingerichtet wird;
eine Datenbank (DB), von der eine Verbindung zu dem Push-Server (PUSH) eingerichet wird;
**dadurch gekennzeichnet, daß** das System aufweist:
einen Nachrichtengenerator (GEN) zum Senden einer Information bezüglich der Kennung und des Standorts des Mobilteilnehmers zu dem Push-Server (PUSH);
einen ersten Datensatz (REC1), der Paare von Ländercode-Operator-Code-Zeitdifferenzen aufweist;
eine Anwendung (PRGM), die die Kennungs-und Standortinformation bezüglich des Mobilteilnehmers von der Heimatdatei (HLR) empfängt und aus dem ersten Datensatz (REC1) den Ländercode abruft und mit Hilfe des Operator-Codes die damit verbundene Zeitdifferenz abruft;
eine Aktualisiereinrichtung (UPP) zum Zählen einer neuen Sendezeit und zum Umstellen der Zeitsteuerung für den Zeitpunkt des Sendens, basierend auf der erwähnten Zeitdifferenz-Information;
einen zweiten Datensatz (REC2) zum Sichern des neuen Sendezeitpunkts und der Zeitdifferenz-Information; und
einen Sender (TRANS) zum Senden der mit dem Push-Service verbundenen Nachricht zu dem Mobilteilnehmer auf der Grundlage der zeitlich neu eingestellten Übertragungszeit.

15. System nach Anspruch 14, **dadurch gekennzeichnet, daß** es weiterhin aufweist:
eine Änderungseinrichtung (CH) zum Ändern der Protokollnachricht zwischen der Mobilvermittlungsstelle/Besucherdatei (MSC/VLR) und der Heimatdatei (HLR), so daß eine Zeitdifferenz-Information an die Protokollnachricht angehängt wird.

16. System nach Anspruch 15, **dadurch gekennzeichnet, daß** die Änderungseinrichtung (CH) weiterhin so ausgebildet ist, daß sie das MAP-Protokoll dahingehend ändert, daß die MAP-Protokollnachricht, die an die Heimatdatei (HLR) zu senden ist, die Zeitzonen-Information beinhaltet.

17. System nach Anspruch 15 oder 16, **dadurch gekennzeichnet, daß** die Heimatdatei (HLR) eine Verbindungseinrichtung (CON) aufweist, um die Zeitdifferenz-Information, die von der Standort-Aktualisierungsnachricht empfangen wurde, als Teil eines Auslösers der Heimatdatei zu verbinden.

18. System nach einem der Ansprüche 15 bis 17, **dadurch gekennzeichnet, daß** die Heimatdatei (HLR) eine Sicherungseinrichtung (SGE) aufweist, um die von der Standort-Aktualisierungsnachricht empfangene Zeitdifferenz-Information zu sichern.

## Revendications

1. Procédé destiné à resynchroniser les services de desserte automatique reliés à un abonné de poste mobile sur la base de la localisation de l'abonné de poste mobile, lequel procédé comprend les étapes consistant à :
activer le service de desserte automatique pour l'abonné de poste mobile,
déterminer le moment de la transmission d'un message lié au service,
**caractérisé en ce que** le procédé comprend en outre les étapes consistant à :
transmettre des informations se rapportant à l'abonné de poste mobile au fournisseur de service de desserte automatique sur la base des informations de mise à jour de la localisation du poste mobile, informations au niveau desquelles il est possible de déterminer le décalage horaire entre la localisation à ce moment du poste mobile et la localisation de l'opérateur de rattachement de l'abonné de poste mobile,
resynchroniser le service de desserte automatique établi sur la base des informations de l'élément d'information de décalage horaire,
envoyer le message lié au service de desserte automatique à l'abonné de poste mobile sur la base de la nouvelle synchronisation.

2. Procédé selon la revendication 1, **caractérisé en ce que** l'identificateur de l'abonné de poste mobile, l'élément d'information de localisation de l'abonné ainsi que le pays et le code d'opérateur liés à la localisation sont transmis au fournisseur du service de desserte automatique.

3. Procédé selon la revendication 1 ou 2, **caractérisé en ce que** le service de desserte automatique établi est resynchronisé de manière à ce que l'élément d'information de décalage horaire mentionné précédemment soit soustrait de l'instant de transmission déterminé à l'origine pour le service, ou bien que l'élément d'information de décalage horaire mentionné précédemment soit ajouté à l'instant de transmission déterminé à l'origine pour le service, suivant la localisation du poste mobile.

4. Procédé selon l'une quelconque des revendications précédentes 1 à 3, **caractérisé en ce que** les informations se rapportant à l'abonné de poste mobile comprennent des informations se rapportant à l'identification et à la localisation dudit abonné de poste mobile.

5. Procédé selon l'une quelconque des revendications précédentes 1 à 4, **caractérisé en ce que** les informations de mise à jour de localisation du poste mobile comprennent un message de mise à jour de localisation transmis depuis un centre de commutation de poste mobile/registre de localisation de visiteur à un registre de localisation de rattachement après que la localisation dudit poste mobile a changé.

6. Procédé selon l'une quelconque des revendications précédentes 1 à 5, **caractérisé en ce qu'**un élément d'information de décalage horaire est rattaché aux information de mise à jour de localisation à transmettre depuis un centre de commutation de poste mobile/registre de localisation de visiteur à un registre de localisation de rattachement et depuis le registre de localisation de rattachement au serveur de desserte automatique sur la base duquel élément d'information de décalage horaire, le service de desserte automatique établi est resynchronisé à la place de décalage horaire déterminé.

7. Procédé selon la revendication 6, **caractérisé en ce que** l'élément d'information de décalage horaire est rattaché au message de protocole MAP à transmettre depuis le centre de commutation de poste mobile/registre de localisation de visiteur au registre de localisation de rattachement.

8. Procédé selon la revendication 6 ou 7, **caractérisé en ce que** l'élément d'information de décalage horaire est utilisé pour représenter un élément d'information de fuseau horaire.

9. Procédé selon l'une quelconque des revendications précédentes 6 à 8, **caractérisé en ce que** l'élément d'information se rapportant à la localisation de l'abonné de poste mobile est utilisé pour représenter le code de pays du centre de commutation de poste mobile/registre de localisation de visiteur et/ou le code d'opérateur.

10. Procédé selon l'une quelconque des revendications précédentes 6 à 9, **caractérisé en ce que** l'élément d'information de décalage horaire reçu du message de mise à jour de localisation est rattaché en tant que partie d'un déclencheur quelconque du registre de localisation de rattachement.

11. Procédé selon l'une quelconque des revendications précédentes 6 à 10, **caractérisé en ce que** l'élément d'information de décalage horaire reçu à partir du message de mise à jour de localisation est sauvegardé dans le registre de localisation de rattachement.

12. Procédé selon l'une quelconque des revendications précédentes 6 à 11, **caractérisé en ce que**, à partir du registre de localisation de rattachement, l'identificateur d'abonné, l'élément d'information de localisation de l'abonné et l'élément d'information de décalage horaire sont émis vers le serveur de desserte automatique ou vers un certain autre composant du réseau sur la base du message de mise à jour de localisation, lorsque le message de mise à jour de localisation créé en raison du changement de localisation du poste mobile déclenche la retransmission des informations dans le registre de localisation de rattachement.

13. Procédé selon l'une quelconque des revendications précédentes 6 à 12, **caractérisé en ce que** le service de desserte automatique est resynchronisé en ajoutant ou en soustrayant l'élément d'information de décalage horaire mentionné précédemment à une heure de commande établie à l'avance.

14. Système destiné à la resynchronisation des services de desserte automatique reliés à un poste mobile sur la base de la localisation de l'abonné de poste mobile dans un système de télécommunication comprenant :
un centre de commutation de poste mobile (MSC/VLR),
un poste mobile (MS) à partir duquel il existe une connexion agencée vers le centre de commutation de poste mobile/registre de localisation de visiteur (MSC/VLR),
un registre de localisation de rattachement (HLR), à partir duquel il existe une connexion agencée vers le centre de commutation de poste mobile/registre de localisation de visiteur (MSC/VLR),
un serveur de desserte automatique (PUSH), à partir duquel il existe une connexion agencée vers le registre de localisation de rattachement (HLR),
une base de données (DB), à partir de laquelle il existe une connexion agencée vers le serveur de desserte automatique (PUSH),
**caractérisé en ce que** le système comprend :
un générateur de message (GEN) destiné à envoyer un élément d'information se rapportant à l'identification et à la localisation de l'abonné de poste mobile au serveur de desserte automatique (PUSH),
un premier enregistrement de données (REC1) qui comprend des paires constituées d'un élément de décalage horaire code de pays/code d'opérateur,
une application (PRGM) qui reçoit l'élément d'identification et les informations de localisation se rapportant à l'abonné de poste mobile depuis le registre de localisation de rattachement (HLR) et qui récupère le code de pays à partir du premier enregistrement de données (REC1) et au moyen du code d'opérateur, le décalage horaire qui lui est rattaché,
des équipements de mise à jour (UPP) destinés à décompter nouvelle heure de transmission et à resynchroniser l'instant de la transmission sur la base de l'élément d'information de décalage horaire mentionné précédemment,
un second enregistrement de données (REC2) destiné à sauvegarder le nouvel instant de transmission et l'élément d'information de décalage horaire, et
un émetteur (TRANS) destiné à émettre le message lié au service de desserte automatique à l'abonné de poste mobile sur la base de l'heure de transmission resynchronisée.

15. Système selon la revendication 14, **caractérisé en ce que** le système comprend en outre :
des équipements de changement (CH) destinés à changer le message de protocole entre le centre de commutation de poste mobile/registre de localisation de visiteur (MSC/VLR) et le registre de localisation de rattachement (HLR), de sorte qu'un élément d'information de décalage horaire est ajouté au message de protocole.

16. Système selon la revendication 15, **caractérisé en ce que** les équipements de changement (CH) sont en outre agencés pour changer le protocole MAP de manière à ce que le message de protocole MAP à émettre vers le registre de localisation de rattachement (HLR) contient l'élément d'information de fuseau horaire.

17. Système selon la revendication 15 ou 16, **caractérisé en ce que** le registre de localisation de rattachement (HLR) comprend des équipements de liaison (CON) pour relier l'élément d'information de décalage horaire reçu du message de mise à jour de localisation en tant que partie d'un certain déclencheur du registre de localisation de rattachement.

18. Système selon l'une quelconque des revendications précédentes 15 à 17, **caractérisé en ce que** le registre de localisation de rattachement (HLR) comprend des équipements de sauvegarde (SGE) destinés à sauvegarder l'élément d'information de décalage horaire reçu à partir du message de mise à jour de localisation.
